(19) **Europäisches Patentamt**
**European Patent Office**
**Office européen des brevets**

(11) **EP 4 191 736 B1**

(12) **EUROPEAN PATENT SPECIFICATION**

(45) Date of publication and mention
of the grant of the patent:
**25.02.2026 Bulletin 2026/09**

(21) Application number: **22842372.9**

(22) Date of filing: **07.07.2022**

(51) International Patent Classification (IPC):
*H01M 10/42* (2006.01)     *H01M 10/0567* (2010.01)
*H01M 10/058* (2010.01)    *H01M 10/052* (2010.01)
*H01M 4/136* (2010.01)     *H01M 4/137* (2010.01)
*H01M 4/58* (2010.01)      *H01M 4/583* (2010.01)
*H01M 4/60* (2006.01)      *H01M 4/62* (2006.01)
*H01M 50/124* (2021.01)    *H01M 4/36* (2006.01)

(52) Cooperative Patent Classification (CPC):
**H01M 10/052; H01M 4/136; H01M 4/137;**
**H01M 4/366; H01M 4/5815; H01M 4/583;**
**H01M 4/602; H01M 4/621; H01M 4/622;**
**H01M 4/628; H01M 50/1243;** Y02E 60/10

(86) International application number:
**PCT/KR2022/009866**

(87) International publication number:
**WO 2023/287110 (19.01.2023 Gazette 2023/03)**

(54) **LITHIUM SECONDARY BATTERY**

LITHIUMSEKUNDÄRBATTERIE

BATTERIE SECONDAIRE AU LITHIUM

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.07.2021  KR 20210091398**
          **06.07.2022  KR 20220082998**

(43) Date of publication of application:
**07.06.2023 Bulletin 2023/23**

(73) Proprietor: **LG Energy Solution, Ltd.**
**Seoul 07335 (KR)**

(72) Inventors:
• **AHN, Jihoon**
  **Daejeon 34122 (KR)**

• **HAN, Dong Hyeop**
  **Daejeon 34122 (KR)**
• **KIM, Bong Soo**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**KR-A- 20060 125 852     KR-A- 20140 083 024**
**KR-A- 20170 045 224     KR-A- 20170 102 001**
**KR-A- 20200 101 252     KR-A- 20210 072 922**
**US-A1- 2017 324 073     US-A1- 2018 316 051**

**Description**

[Technical Field]

This application claims the benefit of priorities based on Korean Patent Application No. 10-2021-0091398 filed on July 13, 2021, and Korean Patent Application No. 10-2022-0082998 filed on July 6, 2022.
The present invention relates to a lithium secondary battery comprising a lithium nitrate holder in a solid state.

[Background Art]

Recently, as the miniaturization, weight reduction, and high performance of electronic devices and communication devices are rapidly progressing and the need for electric vehicles has been greatly increased in relation to environmental problems, there is a growing demand for performance improvements in secondary batteries that can be used as energy sources for these products. As secondary batteries meeting such demands, many studies have been conducted on lithium-sulfur batteries using a sulfur-based material as a positive electrode active material.
A lithium-sulfur battery is a secondary battery using a sulfur-based compound having a sulfur-sulfur bond as a positive electrode active material, and using an alkali metal such as lithium, or a carbon-based material having intercalation/de intercalation of metal ions such as lithium ions as a negative electrode active material.
In particular, the lithium-sulfur battery has theoretical discharging capacity of 1,675 mAh/g and theoretical energy density of 2,600 Wh/kg, which is about 5 times higher than the theoretical energy density of a lithium ion battery currently under study (about 570 Wh/kg), thereby implementing high capacity, high energy density and long lifetime. In addition, since sulfur, which is a main material of a positive electrode active material, has advantages that it has a low atomic weight, is readily supplied due to abundant resources, is low in price, is not toxic, and is environmental-friendly, the lithium-sulfur battery is attracting attention as an energy source for medium and large devices such as electric vehicles as well as portable electronic devices.
Specifically, an oxidation reaction of lithium occurs in a negative electrode of a lithium-sulfur battery, and a reduction reaction of sulfur occurs in a positive electrode. Sulfur has a cyclic $S_8$ structure before discharge, and electric energy is stored and produced using an oxidation-reduction reaction in which an oxidation number of sulfur decreases as sulfur-sulfur bonds are broken during a reduction reaction (discharge), and an oxidation number of sulfur increases as sulfur-sulfur bonds are formed again during an oxidation reaction (charge). During such an electrochemical reaction, the sulfur is converted to linear-structured lithium polysulfide ($Li_2S_x$, x=8, 6, 4 and 2) from cyclic $S_8$ by the reduction reaction, and lithium sulfide ($Li_2S$) is lastly produced when such lithium polysulfide is completely reduced. By the process of being reduced to each lithium polysulfide, a discharge behavior of a lithium-sulfur battery shows gradual discharging voltages unlike a lithium ion battery.
Among lithium polysulfides such as $Li_2S_8$, $Li_2S_6$, $Li_2S_4$ and $Li_2S_2$, which are intermediate products of an electrochemical reaction of a lithium-sulfur battery, lithium polysulfide ($Li_2S_x$, normally x>4) having a high sulfur oxidation number is a material with strong polarity, and is readily dissolved in an electrolyte solution including a hydrophilic organic solvent. Lithium polysulfide dissolved in the electrolyte solution diffuses from a positive electrode due to a difference in the concentration. Lithium polysulfide eluted from the positive electrode in this way leaves an electrochemical reaction area of the positive electrode, and stepwise reduction to lithium sulfide ($Li_2S$) becomes impossible. In other words, lithium polysulfide out of the positive electrode and present in a dissolved state in the electrolyte solution is not able to participate in a charge and discharge reaction of a battery, and as a result, sulfur used as a positive electrode active material is lost, which becomes a major factor causing decreases in capacity and lifetime of a lithium-sulfur battery.
In addition, the eluted lithium polysulfide may undergo a shuttle reaction of being reduced by directly reacting with a negative electrode surface and oxidized again on a positive electrode surface. The shuttle reaction decreases discharge capacity and increases charge capacity causing a problem of decreasing coulombic efficiency expressed as a ratio of discharge capacity/charge capacity.
Methods of adding an additive to an electrolyte have been studied in order to resolve such problems, however, the additive is gradually consumed as the cycle progresses resulting in a rapid decrease in coulombic efficiency after the additive is all consumed.
Accordingly, development of a lithium secondary battery capable of maintaining high coulombic efficiency for a long cycle has been required.

[Prior Art Documents]

[Patent Documents]

Korean Patent Publication No. 10-2015-0032670



[Disclosure]

[Technical Problem]

As a result of conducting various studies to solve the above problems, the inventors of the present invention have confirmed that when comprising a lithium nitrate holder in a solid state in a lithium secondary battery, lithium nitrate is continuously supplied during the operation of battery, and thus high coulombic efficiency is maintained for a long cycle, and have completed the present invention.

Therefore, it is an object of the present invention to provide a lithium secondary battery capable of maintaining high coulombic efficiency for a long cycle.

[Technical Solution]

In order to achieve the above objects, the present invention provides a lithium secondary battery, comprising a cell stack having one or more unit cells, each of the one or more unit cells including a positive electrode, a negative electrode, and a separator interposed between the positive electrode and the negative electrode;

a lithium nitrate holder in a solid state;
an electrolyte solution; and
a battery case in which the cell stack, the lithium nitrate holder in the solid state, and the electrolyte solution are in the battery case and wherein the lithium nitrate holder in the solid state is positioned on one surface or both surfaces of an outermost layer of the cell stack.

[Advantageous Effects]

The lithium secondary battery of the present invention includes a lithium nitrate holder in a solid state, thereby continuously supplying lithium nitrate during the operation of battery and thus maintaining high coulombic efficiency for a long cycle.

[Description of Drawings]

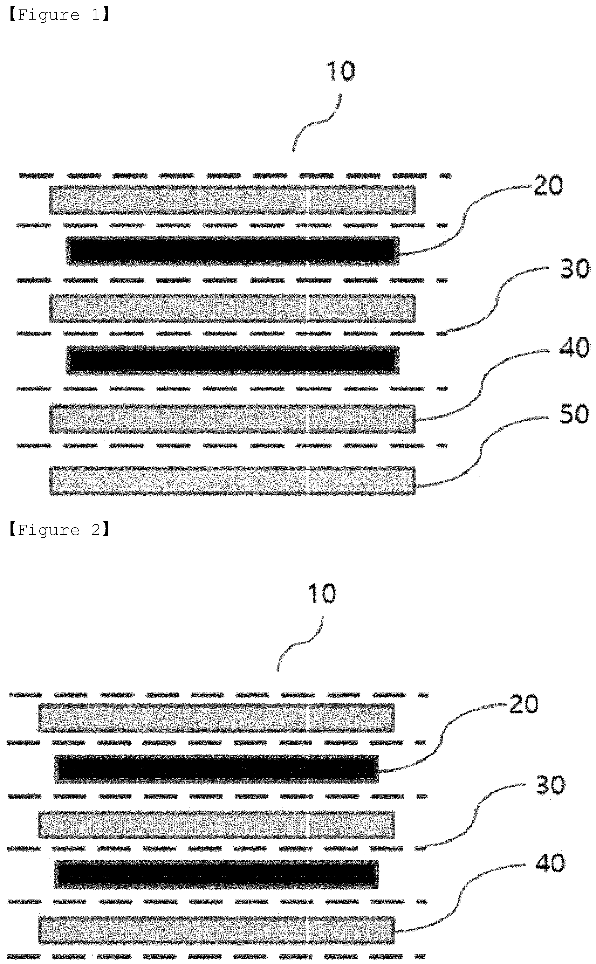

FIG. 1 is a mimetic diagram illustrating a structure of a lithium secondary battery of the present invention.
FIG. 2 is a mimetic diagram illustrating a structure of a conventional lithium secondary battery.

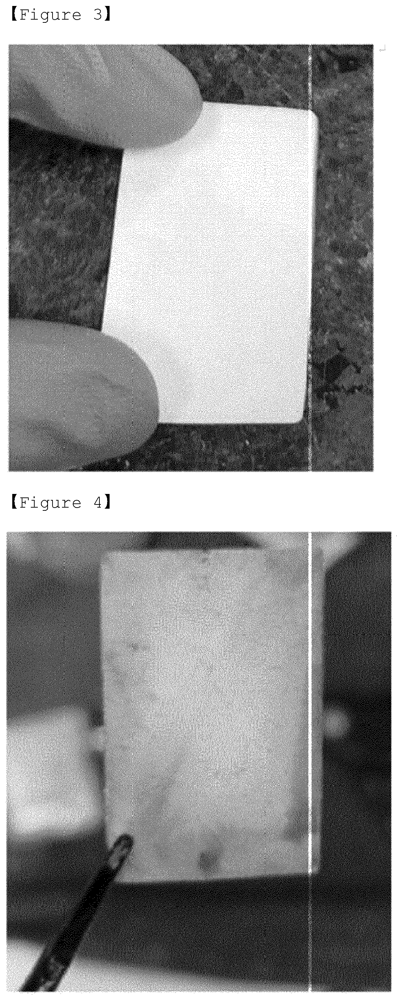

FIG. 3 is a picture of a lithium nitrate-containing film before operating the lithium secondary battery.
FIG. 4 is a picture of a lithium nitrate-containing film after operating the lithium secondary battery.

[Best Mode]

Hereinafter, the present invention will be described in more detail.

In lithium secondary batteries, especially a lithium-sulfur battery thereamong, lithium polysulfide is eluted into an electrolyte solution during charging and discharging, and a shuttle phenomenon may occur. The shuttle phenomenon decreases discharge capacity and increases charge capacity causing a problem of decreasing coulombic efficiency expressed as a ratio of discharge capacity/charge capacity.

In order to prevent the shuttle phenomenon, efforts to maintain high coulombic efficiency for a long cycle using lithium nitrate ($LiNO_3$) as an additive in an electrolyte solution have been attempted in the art. However, lithium nitrate is gradually consumed as the cycle progresses, causing a problem of rapidly decreasing coulombic efficiency after lithium nitrate is substantially consumed. Since solubility of lithium nitrate for an electrolyte solution is limited, adding lithium nitrate to an electrolyte solution in an amount usable for a long cycle is impossible. Accordingly, using lithium nitrate as an electrolyte solution additive has a problem in that the number of cycles capable of maintaining high coulombic efficiency is small.

In view of the above, the present invention has intended to provide a lithium secondary battery capable of maintaining high coulombic efficiency for a long cycle.

In other words, the present disclosure relates to a lithium secondary battery comprising a cell stack 10 having one or more unit cells including a positive electrode 20, a negative electrode 40, and a separator 30 interposed between the positive electrode and the negative electrode;

a lithium nitrate holder in a solid state 50;

an electrolyte solution; and

a battery case in which the cell stack, the lithium nitrate holder in a solid state, and the electrolyte solution are embedded.

In the present disclosure the lithium nitrate holder in a solid state is capable of continuously supplying lithium nitrate during the operation of the lithium secondary battery. Accordingly, a decrease in coulombic efficiency caused by a decrease in the lithium nitrate may be prevented, and high coulombic efficiency may be maintained for a long cycle. A long cycle generally means 200 cycles or more, and high coulombic efficiency means 98% or more.

The lithium nitrate holder in a solid state 50 may be positioned on one surface or both surfaces of an outermost layer of the cell stack. This may be positioned in a space between the battery case and the cell stack.

If the lithium nitrate holder is positioned inside the cell stack, the lithium nitrate holder may act as a factor to increase resistance of the battery, deteriorating battery performance. The lithium nitrate holder positioned inside the cell stack means being positioned between the positive electrode and the separator or between the negative electrode and the separator.

Specifically, a physical structure of the lithium nitrate holder may narrow a material transfer path between the negative electrode and the positive electrode, and thereby interfere material transfer. In addition, due to a thickness of the lithium nitrate holder, a distance between the positive electrode and the negative electrode increases, which may increase a distance that a material needs to move when operating the battery. Accordingly, when the lithium nitrate holder is positioned inside the cell stack, the lithium nitrate holder may act as a factor to increase resistance. The increase in resistance caused therefrom induces an overvoltage when operating the battery, which may reduce energy of the battery, and cause a problem of deteriorating output properties by reducing a maximum dischargeable current.

However, when the lithium nitrate holder is positioned on one surface or both surfaces of an outermost layer of the cell stack, a material transfer between the positive electrode and the negative electrode is not structurally inhibited, and a distance between the positive electrode and the negative electrode does not increase, and therefore, a role of supplying lithium nitrate to the electrolyte may be performed without increasing resistance.

The lithium nitrate holder in a solid state may be a lithium nitrate-containing film ($LiNO_3$ film).

The lithium nitrate-containing film may be a film prepared by mixing lithium nitrate and a binder, or a film having a coating layer formed by coating a coating composition including lithium nitrate and a binder on one surface or both surfaces of a separate substrate film.

According to one embodiment of the present invention, the lithium nitrate-containing film may be a film including lithium nitrate and a binder in a solid content weight ratio of 80:20 to 98:2, or a film in which a coating layer including lithium nitrate and a binder in a solid content weight ratio of 80:20 to 98:2 is formed on one surface or both surfaces of a separate substrate film.

Specifically, in the above range of weight ratio, the lithium nitrate may be 80 or more, 85 or more, 90 or more, 93 or more, 95 or more, 97 or more, 85 or less, 90 or less, 93 or less, 95 or less, or 98 or less. In addition, the binder may be 2 or more, 5 or more, 7 or more, 10 or more, 12 or more, 15 or more, 17 or more, 19 or more, 3 or less, 5 or less, 7 or less, 10 or less, 12 or less, 15 or less, 17 or less, or 20 or less.

If the binder is included in less than the above weight ratio, the lithium nitrate may not be fixed in the film and detached, and if included in excess of the above weight ratio, the binder is included too much, and thus a weight of the coating layer increases when using the same weight of lithium nitrate in the film, thereby lowering the energy density of the lithium secondary battery.

In addition, if the lithium nitrate is included in less than the above weight ratio, the content of lithium nitrate is too small making it difficult to maintain high coulombic efficiency for a long cycle, and if included in exceed of the above weight ratio, the content of binder is too small causing a problem of the lithium nitrate being detached or making coating difficult.

The substrate film is not particularly limited in the type as long as it is used in the art, and for example, aluminum foil (Al foil), copper foil (Cu foil), polyethylene (PE), polyethylene terephthalate (PET), polyimide (PI) and the like may be used.

The binder serves to maintain the lithium nitrate in the film. As the binder, various types of binders such as polyvinylidene fluoride-hexafluoropropylene (PVDF-co-HFP), polyvinylidene fluoride (PVDF), polyacrylonitrile, polymethyl methacrylate, styrene-butadiene rubber (SBR), polyacrylic acid, and carboxyl methyl cellulose (CMC) may be used, and preferably, carboxyl methyl cellulose may be used.

The coating composition may further include a solvent, and the solvent may be included in an amount of 50% by weight to 90% by weight based on the total weight of the coating composition.

After coating the coating composition on one surface or both surfaces of the substrate film, drying may be performed.

The drying may be performed at a temperature of 30 to 80°C, and preferably at a temperature of 40 to 60°C.

If the drying temperature is less than 30°C, the solvent is not sufficiently dried making it impossible to form the lithium nitrate film, and when the temperature exceeds 80°C, the drying rate is too fast causing problems in that the film becomes porous and the lithium nitrate is detached.

The drying time may be a time taken for the aqueous solution to be sufficiently dried, and may be 2 to 8 hours, however, the time is not limited thereto.

After the drying, secondary drying may be additionally performed. The secondary drying may be performed at a temperature of 50 to 150°C for 15 to 30 hours. By performing the secondary drying, the moisture content of the lithium nitrate-containing film may be reduced, thereby suppressing degradation of the lithium secondary battery due to moisture.

After the drying, the prepared lithium nitrate-containing film may be rolled to finally prepare the lithium nitrate-containing film.

The positive electrode 20 may include a positive electrode current collector and a positive electrode active material layer coated on one surface or both surfaces of the positive electrode current collector.

The positive electrode current collector is not particularly limited as long as it has high conductivity without causing a chemical change in the battery, and for example, stainless steel, aluminum, nickel, titanium, sintered carbon, or aluminum or stainless steel surface-treated with carbon, nickel, titanium, silver or the like may be used. In this case, the positive electrode current collector may be used in various forms such as film, sheet, foil, net, porous body, foam, or non-woven fabric having fine irregularities formed on the surface so as to increase adhesive force with a positive electrode active material.

The positive electrode active material layer includes the positive electrode active material, and may further include a conductive material, a binder, an additive and the like.

The positive electrode active material includes sulfur, and specifically, may include at least one selected from the group consisting of elemental sulfur ($S_8$), organic sulfur compound ($Li_2S_n$ ($n\geq1$)), and carbon-sulfur polymer (($C_2S_x)_n$: x=2.5 to 50, $n\geq2$). Preferably, the positive electrode active material may be inorganic sulfur. Accordingly, the lithium secondary battery of the present invention may be a lithium-sulfur battery.

Since sulfur included in the positive electrode active material does not have electrical conductivity alone, it is composited and used with a conductive material such as a carbon material. Accordingly, the sulfur is included in the form of a sulfur-carbon composite, and preferably, the positive electrode active material may be a sulfur-carbon composite.

Carbon included in the sulfur-carbon composite is a porous carbon material, which provides a skeleton capable of uniformly and stably fixing the sulfur and supplements low electrical conductivity of sulfur so that an electrochemical reaction can be smoothly performed.

The porous carbon material may be generally prepared by carbonizing a precursor of various carbon materials. The porous carbon material includes irregular pores therein, and the pores have an average diameter in a range of 1 nm to 200 nm, and pore density or porosity may be in a range of 10% to 90% of the total volume of the porous carbon material. If the pores have an average diameter of less than the above range, the pore size is merely a molecular level making sulfur impregnation impossible, and on the contrary to this, if the pores have an average diameter exceeding the above range, mechanical strength of the porous carbon material is weakened, which is not prefer to be used in the preparation process of an electrode.

The form of the porous carbon material may be a globular type, a rod type, a needle type, a plate type, a tube type or a bulk type, and may be used without limitation as long as it is commonly used in a lithium-sulfur battery.

The porous carbon material may be used without limitation as long as it is a material having a porous structure or a high specific surface area, and commonly used in the art. For example, the porous carbon material may be at least one selected from the group consisting of graphite; graphene; carbon black such as denka black, acetylene black, ketjen black, channel black, furnace black, lamp black or thermal black; carbon nanotubes (CNT) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); graphite such as natural graphite, artificial graphite or expanded graphite; and activated carbon, but are not limited thereto. The porous carbon material may preferably be carbon nanotubes.

The sulfur-carbon composite may include sulfur in an amount of 60 to 90 parts by weight, preferably in 65 to 85 parts by weight, and more preferably in 70 to 80 parts by weight, based on 100 parts by weight of the sulfur-carbon composite. If the sulfur content is less than the above range, as the content of the porous carbon material in the sulfur-carbon composite relatively increases, a specific surface area increases, and thus the content of binder increases when preparing the positive electrode. Such an increase in the amount of binder used may eventually increase the sheet resistance of the positive electrode and serve as an insulator to prevent electron migration (electron pass), thereby degrading the performance of the battery. On the contrary to this, if the content of the sulfur exceeds the above range, as sulfurs, which are not bound to the porous carbon material, aggregate with each other or are re-eluted to the surface of the porous carbon material, it is difficult to receive electrons and thus cannot participate in an electrochemical reaction, which may result in a loss in the capacity of the battery.

In addition, in the sulfur-carbon composite, the sulfur is positioned on at least one of inner and outer surfaces of the porous carbon material described above, and may be present in an area of less than 100%, preferably 1 to 95%, and more preferably 60 to 90% of the entire inner and outer surfaces of the porous carbon material.

When the sulfur is present in the above range on the inner and outer surfaces of the porous carbon material, maximum effect may be obtained in terms of electron transfer area and wettability with an electrolyte. Specifically, since the sulfur is thinly and evenly impregnated on the inner and outer surfaces of the porous carbon material in the above range, an electron transfer contact area may increase in the process of charging and discharging. When the sulfur is located in a 100% area of the entire inner and outer surfaces of the porous carbon material, since the carbon material is completely covered with sulfur, wettability for an electrolyte is deteriorated and contact with a conductive material included in the electrode is reduced, so that it cannot receive electron transfer and thus cannot participate in an electrochemical reaction.

A method for preparing the sulfur-carbon composite is not particularly limited in the present invention, and any method commonly used in the art may be used. For example, a method of simply mixing the sulfur and the porous carbon material, and then compositing the result by heat treating may be used.

The positive electrode active material may further include, in addition to the composition described above, at least one additive selected among a transition metal element, a group IIIA element, a group IVA element, a sulfur compound of these elements, and an alloy of these elements and sulfur.

As the transition metal element, Sc, Ti, V, Cr, Mn, Fe, Co, Ni, Cu, Zn, Y, Zr, Nb, Mo, Tc, Ru, Rh, Pd, Os, Ir, Pt, Au, Hg or the like may be included. As the group IIIA element, Al, Ga, In, Tl or the like may be included, and as the group IVA element, Ge, Sn, Pb or the like may be included.

The positive electrode active material may be included in an amount of 40 to 95% by weight, preferably 45 to 90% by weight, and more preferably 60 to 90% by weight, based on the total 100% by weight of the positive electrode active material layer forming the positive electrode. If the content of the positive electrode active material is less than the above range, it is difficult to sufficiently exhibit the electrochemical reaction of the positive electrode, and on the contrary to this, if the content of the positive electrode active material exceeds the above range, since the contents of the conductive material and the binder, which will be describe later, are relatively insufficient, there are problems in that resistance of the positive electrode increases and physical properties of the positive electrode deteriorates.

The positive electrode active material layer may optionally further include a conductive material for electrons to smoothly migrate in the positive electrode (specifically positive electrode active material) and a binder for well adhering the positive electrode active material to the current collector.

For example, as the conductive material described above, carbon black such as Super-P, denka black, acetylene black, ketjen black, channel black, furnace black, lamp black, or thermal black; carbon derivatives such as carbon nanotubes, graphene or fullerene; conductive fibers such as carbon fibers or metal fibers; fluorocarbon; metal powders such as aluminum powder or nickel powder; or conductive polymers such as polyaniline, polythiophene, polyacetylene or polypyrrole may be used alone or by mixture.

The binder maintains the positive electrode active material on the positive electrode current collector, and organically connects the positive electrode active materials to further increase binding force therebetween, and any binder known in the art may be used. The binder is as described above.

A method for preparing the positive electrode is not particularly limited in the present invention, and a method known by those skilled in the art or various methods modifying the same may be used.

As an example, the positive electrode may be prepared by preparing a positive electrode slurry composition including the composition as described above, and then applying it on at least one surface of the positive electrode current collector.

The positive electrode slurry composition includes the positive electrode active material, the conductor, and the binder as described above, and may further include a solvent in addition thereto.

As the solvent, one capable of uniformly dispersing the positive electrode active material, the conductor, and the binder is used. As such a solvent, water is most preferable as an aqueous solvent, and in this case, the water may be distilled water or deionized water. However, the solvent is not necessarily limited thereto, and if necessary, a lower alcohol readily mixable with water may be used. As the lower alcohol, methanol, ethanol, propanol, isopropanol, butanol and the like may be used, and preferably, these may be used by mixing with water.

The content of the solvent may be included at a level having a concentration capable of facilitating coating, and the specific content varies depending on the application method and apparatus.

The positive electrode slurry composition may further include materials commonly used in the art for the purpose of improving the function and the like as necessary. For example, the positive electrode slurry composition may further include a viscosity modifier, a fluidizing agent, a filler and the like.

The method of applying the positive electrode slurry composition is not particularly limited in the present invention, and for example, methods such as doctor blade, die casting, comma coating, and screen printing may be used. In addition, the positive electrode slurry may also be applied on the positive electrode current collector using a method of pressing or lamination after forming on a separate substrate.

After the above application, a drying process for removing the solvent may be performed. The drying process is performed at temperature and time capable of sufficiently removing the solvent, and the condition is not particularly limited in the present invention because it may vary depending on the type of solvent. As an example, a method of drying by warm air, hot air or low-humidity air, vacuum, and irradiation of (far)infrared rays, electron beam and the like, may be included. The drying rate is generally adjusted to remove the solvent as quickly as possible within a rate range to the extent that the positive electrode active material layer is not cracked due to stress concentration or the positive electrode active material layer is not peeled off from the positive electrode current collector.

Additionally, the current collector may be pressed after the drying to increase the density of the positive electrode active material in the positive electrode. As the press method, methods such as mold press and roll press may be used.

The negative electrode 40 may be formed with a current collector and a negative electrode active material layer formed on one surface or both surfaces thereof. Alternatively, the negative electrode may be a lithium metal plate.

The current collector is for supporting the negative electrode active material, which is not particularly limited as long as it has excellent conductivity and is electrochemically stable in a voltage area of a lithium secondary battery, and for example, copper, stainless steel, aluminum, nickel, titanium, palladium, sintered carbon, copper or stainless steel surface-treated with carbon, nickel, silver or the like, aluminum-cadmium alloys or the like may be used.

The negative electrode current collector may be used in various forms such as film, sheet, foil, mesh, net, porous body, foam, or non-woven fabric having fine irregularities formed on the surface so as to strengthen binding strength with the negative electrode active material.

As the negative electrode active material, a material capable of reversibly intercalating or deintercalating lithium ions, a material capable of reversibly forming a lithium-containing compound by reacting with lithium ion, a lithium metal, or a lithium alloy may be used.

The material capable of reversibly intercalating or deintercalating lithium ions may be, for example, crystalline carbon, amorphous carbon or a mixture thereof.

The material capable of reversibly forming a lithium-containing compound by reacting with lithium ions may be, for example, tin oxide, titanium nitrate or silicon.

The lithium alloy may be, for example, alloys of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

A separator 30 may be further included between the positive electrode and the negative electrode described above.

The separator separates or insulates the positive electrode and the negative electrode from each other and enables lithium ion transfer between the positive electrode and the negative electrode, and may be formed with porous nonconductive or insulating material. Such a separator may be an independent member such as a film, or may be a coating layer added to a positive electrode and/or a negative electrode.

The separator with low resistance to ion migration in the electrolyte and excellent impregnating ability for the electrolyte is preferable.

The separator may be formed with a porous substrate, and any of the porous substrate may be used as long as it is commonly used in a secondary battery, and a porous polymer film may be used alone or by laminating them, and for example, non-woven fabrics made of high melting point glass fiber, polyethylene terephthalate and the like, or polyolefin-based porous film may be used, but the separator is not limited thereto.

The material of the porous substrate is not particularly limited in the present invention, and any porous substrate may be used as long as it is commonly used in an electrochemical device.

For example, the porous substrate may include at least one material selected from the group consisting of polyolefins such as polyethylene and polypropylene, polyesters such as polyethylene terephthalate and polybutylene terephthalate, polyamide, polyacetal, polycarbonate, polyimide, polyetheretherketone, polyethersulfone, polyphenylene oxide, polyphenylene sulfide, polyethylene naphthalate, polytetrafluoroethylene, polyvinylidene fluoride, polyvinyl chloride, polyacrylonitrile, cellulose, nylon, poly(p-phenylene benzobisoxazole) and polyarylate.

A thickness of the porous substrate is not particularly limited, but may be 1 to 100 $\mu$m and preferably 5 to 50 $\mu$m. The range of porous substrate thickness is not limited to the range described above, but if the thickness is excessively thinner than the lower limit described above, mechanical property declines, and thus the separator may be readily damaged during the use of battery.

The average diameter and porosity of the pore present in the porous substrate are not particularly limited as well, but may be 0.001 to 50 $\mu$m and 10 to 95%.

The electrolyte solution includes lithium ions, which is to cause an electrochemical oxidation or reduction reaction in the positive electrode and the negative electrode using this as a medium.

The electrolyte solution may be a solid electrolyte or a non-aqueous electrolyte solution that does not react with lithium metal, but is preferably a non-aqueous electrolyte solution, and includes an electrolyte salt and an organic solvent.

The electrolyte salt included in the non-aqueous electrolyte solution is a lithium salt. The lithium salt may be used without limitation as long as it is commonly used in an electrolyte solution for a lithium secondary battery. For example, LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiC$_4$BO$_8$, LiAsF$_6$, LiSbF$_6$, LiAlCl$_4$, CH$_3$SO$_3$Li, CF$_3$SO$_3$Li,

$(CF_3SO_2)_2NLi$, $(C_2F_5SO_2)_2NLi$, $(SO_2F)_2NLi$, $(CF_3SO_2)_3CLi$, chloroborane lithium, lower aliphatic carboxylic acid lithium, lithium tetraphenylborate, lithium imide and the like may be used.

The concentration of the lithium salt may be properly determined considering ion conductivity, solubility and the like, and for example, may be 0.1 to 4.0 M and preferably 0.5 to 2.0 M. If the concentration of the lithium salt is less than the above range, it is difficult to secure ion conductivity suitable for the operation of battery, and on the contrary to this, if the concentration exceeds the above range, since the viscosity of electrolyte solution increases and thus reduces the lithium ion mobility, and a decomposition reaction of the lithium salt itself increases and thus declines the performance of battery, the concentration is properly adjusted within the above range.

The organic solvent included in the non-aqueous electrolyte solution may be used without limitation as long as it is commonly used in an electrolyte solution for a lithium secondary battery, and for example, ether, ester, amide, linear carbonate, cyclic carbonate and the like may be used alone or by mixing two or more types.

The ether-based compound may include non-cyclic ether and cyclic ether.

For example, the non-cyclic ether may be at least one selected from the group consisting of dimethyl ether, diethyl ether, dipropyl ether, methyl ethyl ether, methyl propyl ether, ethyl propyl ether, dimethoxyethane, diethoxyethane, ethylene glycol ethyl methyl ether, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether, but is not limited thereto.

As an example, the cyclic ether may be at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methylfuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxybenzene, 1,3-dimethoxybenzene, 1,4-dimethoxybenzene and isosorbide dimethyl ether, but is not limited thereto.

Among the above organic solvents, the ester may be any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a mixture of two or more types thereof, however, is not limited thereto.

As a specific example of the linear carbonate compound, any one selected from the group consisting of dimethyl carbonate (DMC), diethyl carbonate (DEC), dipropyl carbonate, ethyl methyl carbonate (EMC), methyl propyl carbonate and ethyl propyl carbonate, or a mixture of two or more types thereof may be used, however, the linear carbonate compound is not limited thereto.

In addition, a specific example of the cyclic carbonate compound may be any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinyl ethylene carbonate and halides thereof, or a mixture of two or more types thereof. The halide thereof may be, for example, fluoroethylene carbonate (FEC) and the like, but is not limited thereto.

The electrolyte solution may include lithium nitrate ($LiNO_3$) as an additive in addition to the electrolyte salt and the organic solvent described above, and as lithium nitrate is included, a stable film is formed on the lithium metal electrode and the charge and discharge efficiency is improved.

The electrolyte may be injected at a proper stage in the preparing process of an electrochemical device depending on the preparing process and required physical properties of a final product. In other words, the electrolyte may be injected at a stage prior to assembling an electrochemical device or at a final stage of electrochemical device assembly. By injecting the electrolyte solution, the cell stack and the lithium nitrate film may be impregnated by the electrolyte solution.

The lithium secondary battery according to the present invention may perform lamination (stack) and folding processes of the separator and the electrode in addition to a winding, which is a general process. The battery case may be a cylinder-type, a prismatic-type, a pouch-type, a coin-type or the like. According to an embodiment of the present invention, the lithium secondary battery may be a cylinder-type lithium secondary battery, a prismatic-type lithium secondary battery, a pouch-type lithium secondary battery, or a coin-type lithium secondary battery, and may be particularly a pouch-type lithium secondary battery.

Hereinafter, preferred examples will be provided in order to facilitate understanding of the present invention, but the following examples are only illustrative of the present invention and it will be apparent to those skilled in the art that various changes and modifications can be made within the category and technical ideas of the present invention, and it is natural that such variations and modifications are also within the scope of the appended claims.

**<Preparation of Lithium-Sulfur Battery>**

### Example 1.

An aqueous solution including lithium-carboxyl methyl cellulose (Li-CMC) of 2% by weight was prepared. Lithium nitrate ($LiNO_3$) was added to the aqueous solution to prepare a coating composition. In this case, the weight ratio of solid content of the lithium nitrate and the lithium-carboxyl methyl cellulose was set to 93:7.

The coating composition was applied on aluminum foil (Al foil), and coated with a mathis coater (Mathis Switzerland, SV-M). After completing the coating, primary drying was performed in an oven at a temperature of 50°C for 5 hours, and then secondary drying was performed in an oven at a temperature of 80°C for 20 hours to prepare a lithium nitrate-containing film.

After that, the lithium nitrate-containing film was rolled to finally prepare a lithium nitrate-containing film.

As a positive electrode active material, sulfur-carbon (CNT) composite (S:C=75:25 (weight ratio)) and 3% by weight of an aqueous lithium-polyacrylic acid (Li-PAA) solution were mixed to prepare a mixture solution. In this case, the weight ratio of solid content of the sulfur-carbon composite and the lithium-polyacrylic acid was set to 95:5.

Water was additionally added to the mixture solution to prepare slurry having a solid content of 30% by weight based on the total weight of the mixture solution.

The slurry was applied on an aluminum foil current collector, and then coated to a predetermined thickness using a Mathis coater (Mathis Switzerland, SV-M). After that, the positive electrode was prepared by drying at a temperature of 50°C for 2 hours.

As a negative electrode, a lithium metal thin film having a thickness of 30 μm was used.

LiFSI of 0.75 M and lithium nitrate ($LiNO_3$) of 6% by weight were dissolved in an organic solvent in which 1,2-dimethoxyethane (DME) and 2-methylfuran (2-MeF) were mixed in a volume ratio of 3:7 to prepare an electrolyte solution.

The positive electrode and the negative electrode were placed to face each other, and a polyethylene separator having a thickness of 16 μm was interposed therebetween to prepare a cell stack.

The cell stack was placed in an aluminum pouch, and the lithium nitrate-containing film was inserted into a space between the cell stack and the pouch. In other words, the lithium nitrate-containing film was inserted onto one surface of an outermost layer of the cell stack.

After that, the electrolyte solution was injected and sealed to prepare a lithium-sulfur battery.

### Comparative Example 1.

A lithium-sulfur battery was prepared in the same manner as in Example 1, except that the lithium nitrate-containing film was not used.

### Experimental Example 1. Evaluation on Coulombic Efficiency of Lithium-Sulfur Battery

The performance of lithium-sulfur batteries prepared in Example 1 and Comparative Example 1 was evaluated using a charge and discharge measuring device (PESCO5-0.01, PNE solution, Korea).

In the first 3 cycles, the charge and discharge capacity of 2.5 to 1.8 V was measured at the current density of 0.1 C, and from the fourth cycle, the charge and discharge capacity was measured by discharging at 0.3 C and charging at 0.2 C.

Thereafter, the coulombic efficiency of lithium-sulfur batteries in Example 1 and Comparative Example 1 was calculated through Equation 1 below, and the results are shown in Table 1 below.

Coulombic efficiency (%)=(discharge capacity of current cycle/discharge capacity of previous cycle) x100    Equation 1

[Table 1]

|  | 50 Cycles | 150 Cycles | 200 Cycles |
|---|---|---|---|
| Example 1 | 99.50% | 98.62% | 98.13% |
| Comparative Example 1 | 99.48% | 98.19% | 97.07% |

In the result of Table 1 above, the lithium-sulfur battery of Example 1 showed a result of maintaining a coulombic efficiency at a predetermined level without decreasing even though the cycle progressed.

However, the lithium-sulfur battery of Comparative Example 1 showed a result of decreasing the coulombic efficiency as the cycle progresses.

From such results, it can be seen that the lithium-sulfur battery including the lithium nitrate-containing film continuously supplies lithium nitrate for a long cycle, and maintains high coulombic efficiency for a long period of time by supplying the lithium nitrate.

The decrease in the coulombic efficiency means that some of the charged materials were not discharged, and means that some of active materials were irreversibly changed, which directly affects on the degradation of battery life.

The result of coulombic efficiency at 200 cycles of Example 1 and Comparative Example 1 showed a difference of about 1%. Since the lithium-sulfur battery has a repeated cycle, and thus an irreversible capacity is exponentially accumulated, the difference of 1% may cause a big difference. Accordingly, it serves a very important role in improving a lifetime of a lithium-sulfur battery to maintain the coulombic efficiency at a higher level. Therefore, it can be seen that the lithium-sulfur battery of Example 1 has very excellent lifetime characteristics than the lithium-sulfur battery of Comparative Example 1.

In other words, the lithium-sulfur battery of the present invention is capable of maintaining high coulombic efficiency for a long cycle, and thus it can have an excellent effect in lifetime characteristics.

To additionally identify that the lithium nitrate-containing film supplies lithium nitrate during the operation of battery, the lithium nitrate-containing film was checked after operating the lithium-sulfur battery of Example 1. The color of the electrolyte solution was identified in the lithium nitrate-containing film. Since the lithium nitrate-containing film was present while being in contact with the electrolyte solution, it could be seen that the lithium nitrate-containing film supplied lithium nitrate when operating the lithium-sulfur battery.

[Description of Symbol]

10: Cell Stack
20: Positive Electrode
30: Separator
40: Negative Electrode
50: Lithium Nitrate Holder in Solid State

## Claims

1. A lithium secondary battery comprising:

    a cell stack having one or more unit cells, each of the one or more unit cells including a positive electrode, a negative electrode, and a separator interposed between the positive electrode and the negative electrode;
    a lithium nitrate holder in a solid state;
    an electrolyte solution; and
    a battery case,
    wherein the cell stack, the lithium nitrate holder in the solid state, and the electrolyte solution are in the battery case; and
    wherein the lithium nitrate holder in the solid state is positioned on one surface
    or both surfaces of an outermost layer of the cell stack.

2. The lithium secondary battery according to claim 1, wherein the lithium nitrate holder in the solid state is a lithium nitrate-containing film.

3. The lithium secondary battery according to claim 2, wherein the lithium nitrate-containing film includes lithium nitrate and a binder, or
    wherein the lithium nitrate-containing film includes a coating layer, the coating layer including lithium nitrate and a binder being formed on one surface or both surfaces of a substrate film.

4. The lithium secondary battery according to claim 3, wherein the lithium nitrate-containing film comprises the lithium nitrate and the binder having a solid content weight ratio of 80:20 to 98:2,
    or wherein the coating layer of the lithium nitrate-containing film comprising the lithium nitrate and the binder having a solid content weight ratio of 80:20 to 98:2 is formed on one surface or both surfaces of the substrate film.

5. The lithium secondary battery according to claim 1, wherein the positive electrode comprises at least one positive electrode active material selected from the group consisting of an elemental sulfur (S8), an organic sulfur compound (Li2Sn (n≥1)), and a carbon-sulfur polymer ((C2Sx)n: x=2.5 to 50, n≥2).

**Patentansprüche**

1. Lithium-Sekundärbatterie, umfassend:

   einen Zellenstapel mit einer oder mehreren Einheitszellen, wobei jede der einen oder mehreren Einheitszellen eine positive Elektrode, eine negative Elektrode und einen zwischen der positiven Elektrode und der negativen Elektrode angeordneten Separator umfasst;
   einen Lithiumnitrathalter in einem festen Zustand;
   eine Elektrolytlösung; und
   ein Batteriegehäuse,
   wobei sich der Zellenstapel, der Lithiumnitrathalter in dem festen Zustand und die Elektrolytlösung in dem Batteriegehäuse befinden; und
   wobei der Lithiumnitrathalter in dem festen Zustand auf einer Oberfläche oder
   beiden Oberflächen einer äußersten Schicht des Zellenstapels positioniert ist.

2. Lithium-Sekundärbatterie nach Anspruch 1, wobei der Lithiumnitrathalter in dem festen Zustand ein Lithiumnitrat enthaltender Film ist.

3. Lithium-Sekundärbatterie nach Anspruch 2, wobei der Lithiumnitrat enthaltende Film Lithiumnitrat und ein Bindemittel umfasst, oder
   wobei der Lithiumnitrat enthaltende Film eine Beschichtungsschicht umfasst, wobei die Beschichtungsschicht Lithiumnitrat und ein Bindemittel umfasst, die auf einer Oberfläche oder beiden Oberflächen eines Substratfilms gebildet sind.

4. Lithium-Sekundärbatterie nach Anspruch 3, wobei der Lithiumnitrat enthaltende Film das Lithiumnitrat und das Bindemittel mit einem Feststoffgehalt-Gewichtsverhältnis von 80:20 bis 98:2 umfasst,
   oder wobei die Beschichtungsschicht des Lithiumnitrat enthaltenden Films, der das Lithiumnitrat und das Bindemittel mit einem Feststoffgehalt-Gewichtsverhältnis von 80:20 bis 98:2 umfasst, auf einer Oberfläche oder beiden Oberflächen des Substratfilms gebildet ist.

5. Lithium-Sekundärbatterie nach Anspruch 1, wobei die positive Elektrode mindestens ein Positivelektroden-Aktivmaterial umfasst, das aus der Gruppe ausgewählt ist, die aus einem elementaren Schwefel (S8), einer organischen Schwefelverbindung (Li2Sn (n≥1)) und einem Kohlenstoff-Schwefel-Polymer ((C2Sx)n: x=2,5 bis 50, n≥2) besteht.

**Revendications**

1. Batterie rechargeable au lithium comprenant :

   un empilement d'éléments ayant une ou plusieurs cellules unitaires, chacune de la ou des cellules unitaires incluant une électrode positive, une électrode négative et un séparateur interposé entre l'électrode positive et l'électrode négative ;
   un support de nitrate de lithium à l'état solide ;
   une solution d'électrolyte ; et
   un boîtier de batterie,
   dans laquelle l'empilement d'éléments, le support de nitrate de lithium à l'état solide et la solution d'électrolyte sont dans le boîtier de batterie ; et
   dans laquelle le support de nitrate de lithium à l'état solide est positionné sur une surface ou les deux surfaces d'une couche la plus extérieure de l'empilement d'éléments.

2. Batterie rechargeable au lithium selon la revendication 1, dans laquelle le support de nitrate de lithium à l'état solide est un film contenant du nitrate de lithium.

3. Batterie rechargeable au lithium selon la revendication 2, dans laquelle le film contenant du nitrate de lithium inclut du nitrate de lithium et un liant, ou

dans laquelle le film contenant du nitrate de lithium inclut une couche de revêtement, la couche de revêtement incluant du nitrate de lithium et un liant étant formé sur une surface ou les deux surfaces d'un film de substrat.

4. Batterie rechargeable au lithium selon la revendication 3, dans laquelle le film contenant du nitrate de lithium comprend le nitrate de lithium et le liant ayant un rapport en poids de teneur en solides de 80:20 à 98:2, ou dans laquelle la couche de revêtement du film contenant du nitrate de lithium comprenant le nitrate de lithium et le liant ayant un rapport en poids de teneur en solides de 80:20 à 98:2 est formée sur une surface ou les deux surfaces du film de substrat.

5. Batterie rechargeable au lithium selon la revendication 1, dans laquelle l'électrode positive comprend un ou plusieurs matériaux actifs d'électrode positive sélectionnés dans le groupe constitué d'un soufre élémentaire (S8), un composé de soufre organique (Li2Sn (n≥1)) et un polymère de carbone-soufre ((C2Sx)n: x=2,5 to 50, n≥2).

【Figure 1】

【Figure 2】

【Figure 3】

【Figure 4】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210091398
- KR 1020220082998

- KR 1020150032670